(19) Europäisches Patentamt
European Patent Office
Office européen des brevets

(11) **EP 0 899 543 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(51) Int Cl.:
*G01C 25/00* *(2006.01)*     *B62D 6/00* *(2006.01)*
*B62D 6/04* *(2006.01)*     *G05D 1/08* *(2006.01)*

(21) Anmeldenummer: **98114595.6**

(22) Anmeldetag: **04.08.1998**

(54) **Verfahren und Anordnung zur Überprüfung der Gierrate eines sich bewegenden Objektes**

Method and device for determining the yaw rate of a moving object

Procédé et dispositif pour la détermination de la vitesse de lacet d'un objet mobile

(84) Benannte Vertragsstaaten:
**DE ES FR GB SE**

(30) Priorität: **25.08.1997 DE 19736965**

(43) Veröffentlichungstag der Anmeldung:
**03.03.1999 Patentblatt 1999/09**

(73) Patentinhaber: **SIEMENS AKTIENGESELLSCHAFT**
**80333 München (DE)**

(72) Erfinder: **Hofmeyer, Andreas**
**61350 Bad Homburg (DE)**

(56) Entgegenhaltungen:
**EP-A- 0 282 041**     **EP-A- 0 354 561**
**EP-A- 0 514 343**     **EP-A- 0 563 885**
**DE-A- 4 407 757**

**Beschreibung**

Die Erfindung betrifft ein Verfahren zur Überprüfung der Gierrate eines sich bewegenden Objektes.

Das Fahrverhalten eines Fahrzeuges wird von zahlreichen externen Störgrößen beeinflußt.

So wird das Fahrzeug durch starken seitlichen Windeinfall aus seiner Fahrbahn abgelenkt.

Bei plötzlich einsetzendem Seitenwind ist eine Drehung des Fahrzeuges um seine Fahrzeughochachse aus der bisherigen Fahrtrichtung hinaus zu registrieren. Solche Drehwinkel werden mit am Fahrzeug angeordneten Gierratensensoren detektiert, die ein Signal an eine Fahrzeugsteuerelektronik senden. Diese Fahrzeugsteuereinrichtung bestimmt z. B. Korrekturfaktoren, mittels denen Lenksysteme den Seitenwindeinfluß korrigieren.

Aber auch bei automatischen Geschwindigkeit- und Abstandsregelsystemen finden solche Gierratensensoren Anwendung.

Bei solchen Systemen wird mit Hilfe von Signalen der Gierratensensoren ein Fahrkorridor vorausgesagt. Das heißt, es wird festgestellt, an welcher Stelle sich das Fahrzeug nach Ablauf eines vorgegebenen Zeitraumes aufhalten wird und welche vorausfahrenden Fahrzeuge sich im Fahrkorridor des eigenen Fahrzeuges aufhalten.

Der Fahrkorridor wird dabei aus dem Kurvenradius des Kraftfahrzeuges bestimmt, welcher wiederum aus der Fahrzeuggeschwindigkeit und dem Signal des Gierratensensors hergeleitet wird.

Das Dokument DE 44 07 757 A1 beschreibt eine Vorrichtung zur Erfassung von Hindernissen für Fahrzeuge. Die Vorrichtung sagt einen abgeleiteten Fahrweg voraus, basierend auf dem Lenkwinkel, der Geschwindigkeit und der Gierrate.

Das Dokument EP 0 514 343 A2 beschreibt eine Vorrichtung, welche einen vorbestimmten Weg für ein Fahrzeug berechnet. Es wird ein Punkt auf diesem Weg identifiziert und das Fahrzeug wird auf diesen Punkt hin gesteuert.

Das Dokument EP 0 354 561 A2 beschreibt eine Vorrichtung, welche ein erlaubtes Fahrgebiet und einen Zielkurs innerhalb dieses Fahrgebietes bestimmt. Es wird abgeschätzt, wie das Fahrzeug gesteuert werden muss, um den Zielkurs zu halten.

Liefern die Sensoren ungenaue Signale und wird infolge dieser Signale ein falscher Fahrkorridor bestimmt, kann es zu unabsehbaren Folgen im Straßenverkehr kommen, da womöglich der Abstand auf ein falsches Fahrzeug geregelt wird.

Der Erfindung liegt somit die Aufgabe zugrunde, ein Verfahren zur Feststellung eines Gierratenfehlers anzugeben.

Erfindungsgemäß wird die Aufgabe dadurch gelöst, dass ein in Bewegungsrichtung des Objektes auftretendes Vergleichsobjekt erfasst wird und eine erste tatsächliche Position des Vergleichsobjektes mit einer Projektion des Vergleichsobjektes auf diese tatsächliche Position verglichen wird, wobei die Projektion aus einer zweiten zu einem anderen Zeitpunkt erfassten tatsächlichen Position des Vergleichsobjektes abgeleitet wird und bei Differenz der ersten tatsächlichen Position und der Projektion auf Fehler erkannt wird.

Der Vorteil der Erfindung besteht darin, dass die Gierrate mit Hilfe von Objekten überprüft wird, die im Umfeld des sich bewegenden Objektes aktuell vorhanden sind.

Ist das Vergleichsobjekt ein feststehendes Objekt, wird die aktuelle Position des Vergleichsobjektes mit einer aus der erstmaligen Erfassung des Vergleichsobjektes abgeleiteten Projektion auf die aktuelle Position verglichen.

Bewegt sich das Vergleichsobjekt in entgegengesetzter Richtung zu dem sich bewegenden Objekt, wird die letzte durch das sich bewegende Objekt erfaßte Position des Vergleichsobjektes mit der Projektion der ersten erfaßten Position des Vergleichsobjektes auf die letzte tatsächlich erfaßte Position des Vergleichsobjektes verglichen.

Wenn sich das Vergleichsobjekt in dieselbe Richtung wie das sich bewegende Objekt bewegt, aber mit einer höheren Geschwindigkeit als das sich bewegende Objekt, erfolgt der Vergleich zwischen der ersten tatsächlich erfaßten Position des Vergleichsobjektes mit der Projektion aus der letzten erfaßten Position des Vergleichsobjektes auf die erste erfaßte Position.

Vorteilhafterweise wird die Projektion aus einer Objektspur bestimmt, die alle Positionen des Vergleichsobjektes zu unterschiedlichen vorgegebenen Zeitpunkten enthält.

Die Objektspur wird dabei ausgehend von der erfaßten Position des Vergleichsobjektes mit Hilfe der Geschwindigkeit und der Gierrate des sich bewegenden Objektes gebildet.

Eine so erhaltene Objektspur ist leicht in einer Tabelle ablegbar. Bildlich betrachtet wird infolge der Objektspur eine erdachte (imaginäre) Fahrspur des Vergleichsobjektes gebildet, welche mit dem tatsächlichen Verhalten des Vergleichsobjektes verglichen wird. Ist die Gierrate korrekt, sind beide Spuren identisch. Tritt ein Fehler auf, laufen Objektspur und Fahrspur auseinander.

In einer Weiterbildung wird die Gierrate des sich bewegenden Objektes mittels einem an diesem angeordneten Gierratensensor gemessen.

Ist das sich bewegende Objekt ein Kraftfahrzeug, werden die Radgeschwindigkeiten zweier Fahrzeugräder gemessen und aus der Differenz der Radgeschwindigkeiten die Gierraten des Kraftfahrzeuges bestimmt.

Dies hat den Vorteil, daß durch Messung der Radgeschwindigkeiten der tatsächliche Geschwindigkeitsunterschied an beiden Fahrzeugrädern in die Bestimmung der Gierrate eingeht.

Der Kurvenradius des Fahrzeuges wird dann einfacherweise aus der Differenzgeschwindigkeit dieser

beiden Fahreugräder bestimmt.

Eine Anordnung zur Überwachung der Gierrate eines sich bewegenden Objektes weist einen Sensor auf, der die in Bewegungsrichtung des sich bewegenden Objektes auftretenden Objekte erfaßt, mit einer Sensorsignalaufbereitungsanordnung verbunden ist, die Abstand und Relativgeschwindigkeit der überwachten und erfaßten Objekte an eine Regeleinrichtung führt, welche die Objektspur des Vergleichsobjektes bestimmt. Vorteilhafterweise bestimmt die Regeleinrichtung auch die Fahrspur des sich bewegenden Objektes.

In einer Ausgestaltung ist der Sensor an der Vorderfront des Kraftfahrzeuges zur Erfassung der vorausfahrenden Objekte angeordnet. Der Sensor arbeitet dabei nach dem Rückstrahlprinzip und ist vorteilhafterweise ein Radarsensor.

In einer Weiterbildung ist der Sensor, die Signalaufbereitungsanordnung sowie die Regeleinrichtung in einer baulichen Einheit an der Vorderfront des zu regelnden Fahrzeuges angeordnet.

Die Erfindung läßt zahlreiche Ausführungsbeispiele zu. Eines davon soll anhand der in den Figuren dargestellten Zeichnungen näher erläutert werden:

Es zeigen:

Fig. 1:　Anordnung des Abstandsregelsystems am Kraftfahrzeug,

Fig. 2:　prinzipieller Aufbau des Abstandsregelsystems,

Fig. 3:　Anordnung zur Bestimmung des Fahrkorridors des Kraftfahrzeuges,

Fig. 4:　Erfassung des Vergleichsobjektes,

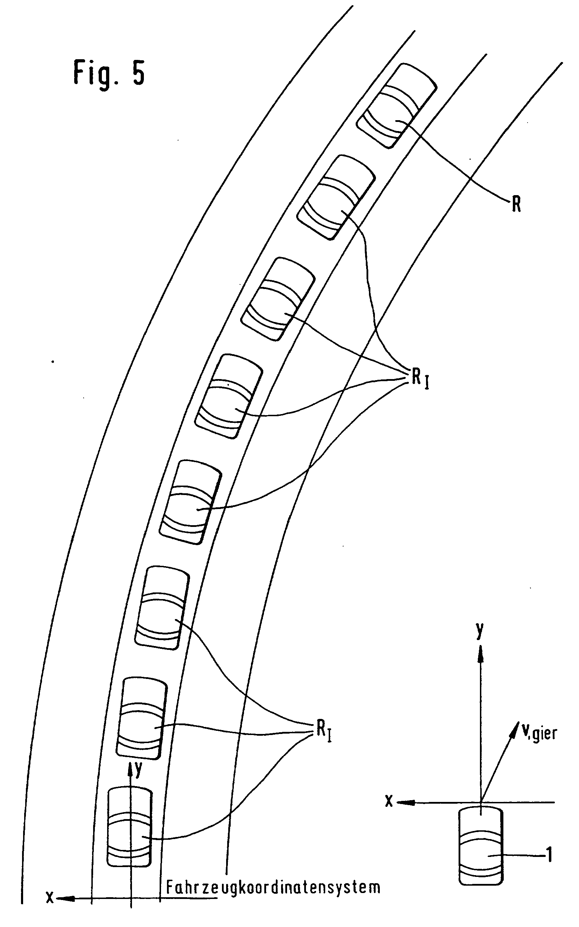

Fig. 5:　Darstellung des Schleppobjektes,

Fig. 6:　Bestimmung des Fehlers der Gierrate anhand eines Standobjektes,

Fig. 7:　Bestimmung des Fehlers der Gierrate anhand eines entgegenkommenden Fahrzeuges,

Fig. 8　Bestimmung des Fehlers der Gierrate anhand eines sich entfernendes Fahrzeuges.

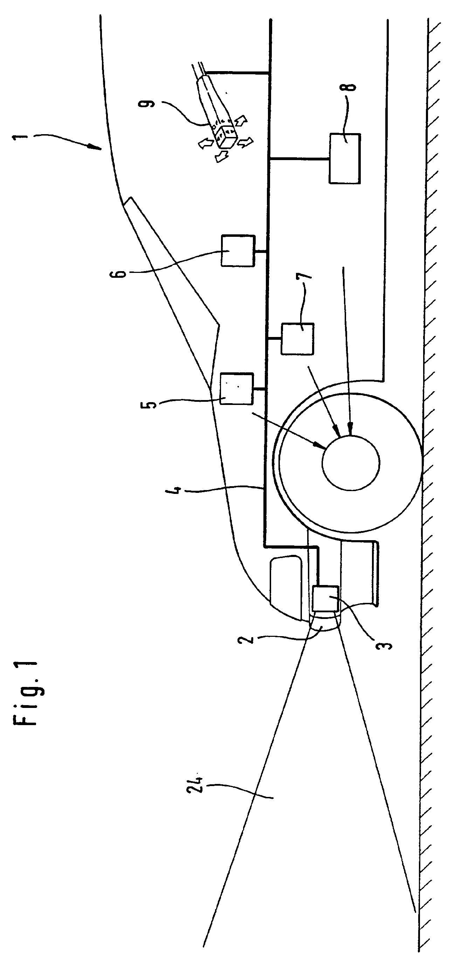

In Figur 1 ist an der Stoßstange 2 eines Kraftfahrzeuges 1 ein automatisches Geschwindigkeits- und Abstandsregelsystem 3 zur Einhaltung des Sicherheitsabstandes von Fahrzeugen angeordnet. Bei Annäherung des geregelten Fahrzeuges an ein langsameres Fahrzeug wird automatisch der Abstand und die Geschwindigkeit zum vorausfahrenden Fahrzeug reguliert. Ist die Fahrspur wieder frei, beschleunigt das System das Fahrzeug auf die zuvor eingestellte Wunschgeschwindigkeit.

Das Ein-/Ausschalten des Geschwindigkeits- und Abstandsregelsystems 3 erfolgt per Bedienhebel 9. Auch die Wunschgeschwindigkeit des Fahrzeuges wird mit Hilfe des Bedienhebels 9 eingestellt. Die vom Fahrer gewünschte Reisegeschwindigkeit wird so gespeichert, erhöht oder verringert.

Über ein Bussystem 4 ist das automatische Geschwindigkeits- und Abstandsregelsystem 3 mit der Motorsteuerung 5, der Bremse 7 und dem Getriebe 8 verbunden. Elektronische Befehle regulieren den Abstand und die Geschwindigkeit zum vorausfahrenden Fahrzeug. Über eine Anzeigeeinheit 6, die ebenfalls von dem Geschwindigkeits- und Abstandsregelsystem 3 über das Bussystem 4, vorzugsweise einem CAN-Bus, angesteuert wird, wird die aktuelle Geschwindigkeit und auch der Abstand zum vorausfahrenden Fahrzeug angezeigt.

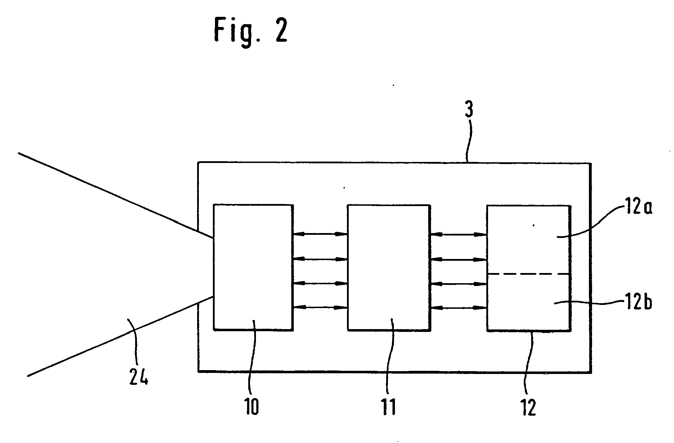

Wie in Figur 2 dargestellt, bildet das automatische Geschwindigkeits- und Abstandsregelsystem 3 eine bauliche Einheit zwischen Sensor 10, Sensorsignalaufbereitungsanordnung 11 und dem Abstandsregelsystem 12.

Das Abstandsregelsystem 12 weist dabei eine Einrichtung 12a zur Bestimmung der Fahrspur des Fahrzeuges und der Objektspur des Vergleichsobjektes sowie einen Längsregler 12b auf, der den Abstand zu einem Regelobjekt herstellt.

Der Sensor 10 ist dabei ein Radar- oder Lasersensor, der in regelmäßigen Abständen, z. B. alle 60 ms in Fahrtrichtung des Fahrzeuges Signale aussendet, welche von den Fahrzeugen, die sich im Signalstrahl befinden, reflektiert werden. Aus diesen zurückgesendeten Signalen wird von der Signalaufbereitungsschaltung 11 der Abstand und die Relativgeschwindigkeit der vorausfahrenden Fahrzeuge bestimmt. Diese Meßergebnisse werden von der Signalaufbereitungsanordnung 11 an das Abstandsregelsystem 12 weitergegeben.

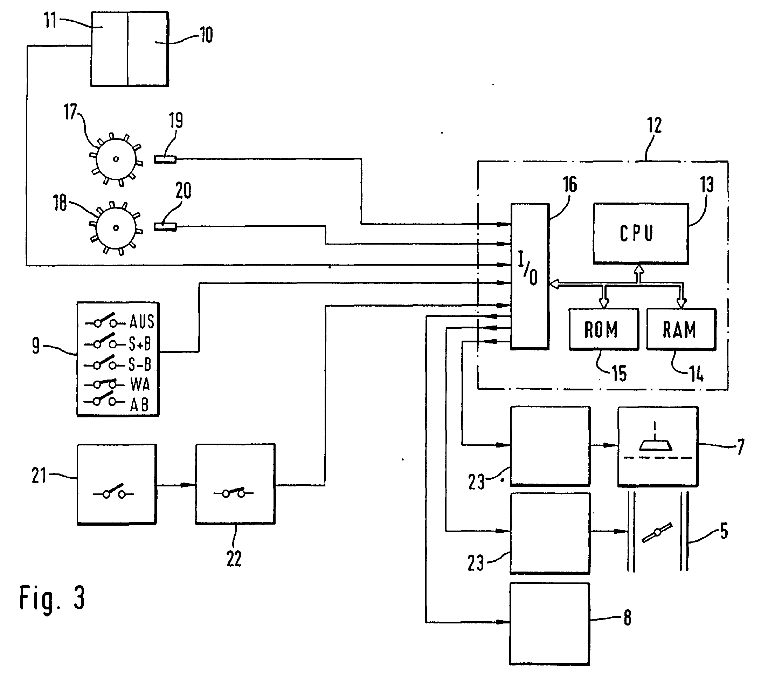

Wie in Figur 3 dargestellt, besteht das Abstandsregelsystem 12 aus einem leistungsstarken Mikrorechner 12, der wiederum aus einer zentralen Recheneinheit 13, einem Arbeitsspeicher 14, einem Festwertspeicher 15 sowie einer Ein-/Ausgabeeinheit 16 aufgebaut ist. Die Ein-/Ausgabeeinheit 16 erhält dabei vom der Sensorsignalaufbereitungsanordnung 11 wie schon beschrieben die Informationen über den Abstand und die Relativgeschwindigkeit der vorausfahrenden Fahrzeuge. Die Aufgaben der Fahrspur- und Objektspurbestimmung sowie der Längsregelung werden von diesem Mikrorechner übernommen.

Am Fahrzeug selbst sind Inkrementscheiben 17 und 18 an den jeweils beiden nicht weiter dargestellten Vorderrädern angeordnet. Den Inkrementscheiben 17, 18 gegenüberliegend sind Drehzahlsensoren 19, 20 angeordnet. Die von den Drehzahlsensoren 19, 20 detektierten Drehzahlsignale werden ebenfalls über die Ein-/Ausgabeeinheit 16 dem Mikrorechner 12 zugeführt. Der Mikrorechner 12 berechnet aus den vom Sensor 10 gelieferten Signalen (Abstandssignal und Relativgeschwindigkeitssignal) und mit Hilfe der Radgeschwindigkeiten die Geschwindigkeitsdifferenz zwischen beiden Fahrzeugen und ermittelt aus diesen den sicheren Mindestabstand. Wird diese unterschritten, warnt das System bei aktivierter Warnfunktion den Fahrer.

Ist der Abstandsbetrieb vom Fahrer eingeschaltet, wird der Abstand zum vorausfahrenden Fahrzeug automatisch auf einen wählbaren Abstand eingeregelt. Per Tastendruck auf den Bedienschalter 9 wird, wie bereits erläutert, eine gewünschte Geschwindigkeit und/oder der gewünschte Abstand eingestellt und gespeichert und vom System aufrechterhalten.

Bei Annäherung an ein langsameres Fahrzeug übernimmt der Mikrorechner 12 durch automatisches Schließen der Drosselklappe 5 eine Verringerung der Fahrzeuggeschwindigkeit und regelt so den eingestellten Sollabstand zum vorausfahrenden Fahrzeug, wobei der Sollabstand immer größer/gleich dem gesetzlich vorgegebenen Sicherheitsabstand ist. Neben dem automatischen Schließen der Drosselklappe 5 ist auch eine Einwirkung auf die Bremse 7 und/oder eine Ansteuerung der Getriebesteuerung 8 zur Verringerung der Fahrgeschwindigkeit möglich. Die Ansteuerung der Drosselklappe 5, der Bremse 7 oder des Getriebes 8 erfolgt dabei über je eine elektrische Endstufe 23. Ist die Fahrspur wieder frei, beschleunigt der Abstandsregler 12 das Fahrzeug auf die eingestellte Maximalgeschwindigkeit. Bei einer Fahrzeugvorausfahrt ist immer die Abstandsregelung aktiv. Diese Abstandsregelung ist nicht auf Verbrennungsmotoren begrenzt. Ein Einsatz für Dieselmotoren, Gasturbinen u.ä. ist durchaus denkbar.

Weiterhin ist der Mikrorechner 12 mit Schaltern der Fahrzeugbremse 21 bzw. der Fahrzeugkupplung 22 verbunden. Werden diese vom Fahrer über das Kupplungs- und Bremspedal betätigt, bewirken sie im Normalbetrieb ein Abschalten der Regelung.

Im Mikroprozessor 12 bildet der Längsregler 12b den Vergleich zwischen einem Soll- und Istwert eines in der Software abgelegten Regelungskonzeptes. Ist man im Regelbereich, so wird vom Mikrorechner ein Ausgangssignal ausgegeben, das vom Regelungskonzept ermittelt wird.

Aus den von den Drehzahlsensoren 19, 20 erfaßten Drehzahlsignalen ermittelt die im Mikroprozessor 12 gebildete Einrichtung zur Fahr- und Objektspurbestimmung 12a die Gierrate des Kraftfahrzeuges. Die Gierrate bestimmt sich wie folgt:

$$\varphi = \frac{\Delta v_{VR}}{s + v^2 \cdot k}$$

wobei

$\Delta V_{VR}$     die Geschwindigkeitsdifferenz der Vorderräder des Kraftfahrzeuges,

s     die Spurbreite zwischen den Vorderrädern,

v     die Fahrzeuggeschwindigkeit,

k     der Dynamikkorrekturfaktor ist.

Mit Hilfe der so bestimmten Gierrate wird nun die Fahrspur 25 des Kraftfahrzeuges 1 aus dem Kurvenradius $R = \frac{v_R}{\varphi}$ berechnet.

Der von jedem Vorderrad gefahrene Radius bestimmt sich aus dem Quotienten der Radgeschwindigkeit $v_R$ durch die Gierrate $\phi$.

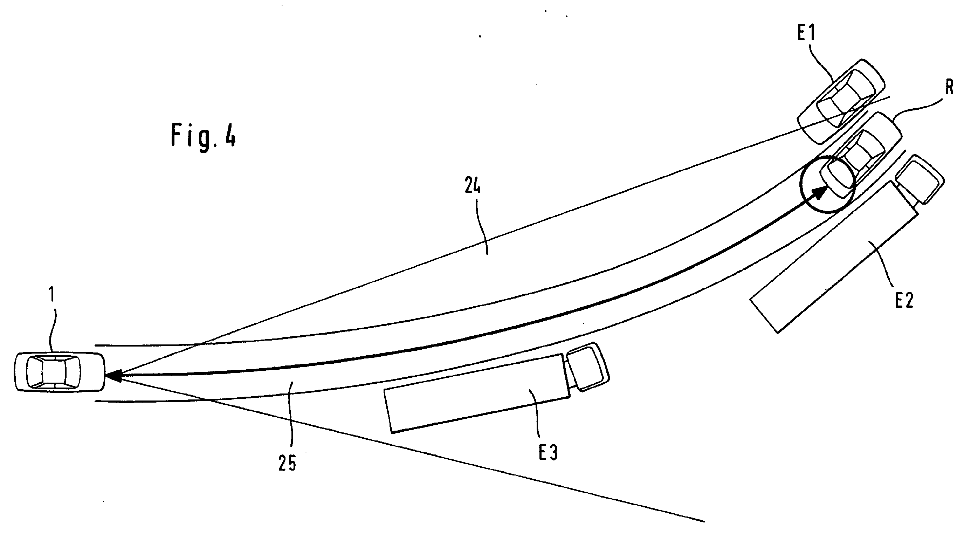

Wie in Figur 4 dargestellt, erfaßt das Fahrzeug 1 mit Hilfe des ausgesendeten Radarstrahles 24 mehrere Fahrzeuge E1, E2, E3. Die Sensorauswerteelektronik 11 ermittelt von diesen drei Objekten E1, E2, E3 den Abstand zum zu regelnden Fahrzeug 1 in Form der Positionskoordinaten x, y und die Relativgeschwindigkeit jedes Fahrzeuges zum Kraftfahrzeug 1. Weiterhin wird überwacht, ob das detektierte Objekt E1, E2, E3 bei jeder Messung wieder im Radarstrahl erfaßt wird. Ist dies nicht der Fall, wird es bei der Regelung nicht berücksichtigt.

Um nun zu überprüfen, ob die Gierrate richtig ermittelt wurde, soll die Bestimmung des Gierratenfehlers anhand der vom Radar erfaßten Objektes E erfolgen.

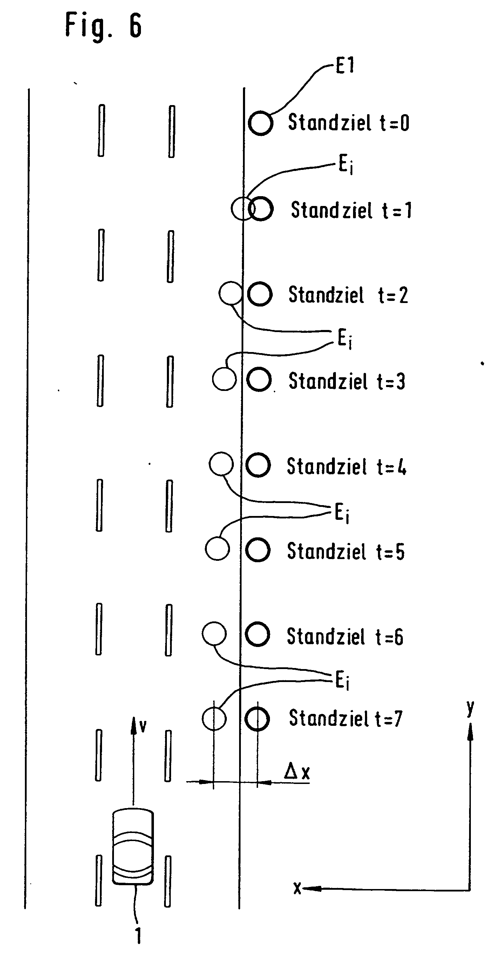

In Figur 6 ist das vom Radar erfaßte Objekt E1 ein Standziel. Das Standziel wird zum Zeitpunkt t = 0 das erste Mal erfaßt. Ausgehend von den erfaßten Koordinaten $x_0$, $y_0$ zum Zeitpunkt t = 0 wird nun eine Objektspur mit Hilfe der Geschwindigkeit v und der Gierrate φ des sich bewegenden Fahrzeuges 1 bestimmt. Die Objektspur enthält imaginäre Objekte $E_i$ deren Koordinaten zu denselben Zeitpunkten bestimmt werden, wie der Radarsensor das tatsächliche Objekt E1 detektiert. Üblicherweise werden sieben Messungen in gleichen Zeitabständen durchgeführt.

Die imaginären Objekte weisen zu den unterschiedlichen Zeitpunkten folgende Koordinaten auf:

| Zeitpunkt | | |
|---|---|---|
| | t = 1 | $(x_1, y_1)$ |
| | t = 2 | $(x_2, y_2)$ |
| . | t = 3 | $(x_3, y_3)$ |
| .    bis | t = 7 | $(x_7, y_7)$ |

Da das Fahrzeug mit konstanter Geschwindigkeit geradeaus fährt und keinen Spurwechsel durchführt, bewegt sich das Standziel jeweils um einen festen Weg von t = 0 nach t = 1 bis t = 7. Zu diesen Zeitpunkten werden unterschiedliche Koordinaten x, y desselben Zieles E1 durch den Radarsensor erfaßt und im Mikroprozessor 12 gespeichert.

Das tatsächlich detektierte Objekt E1 weist fol-

gende Positionen auf:

| Zeitpunkt | t = 1 | $(x_0, y_1)$ |
|---|---|---|
|  | t = 2 | $(x_0, y_2)$ |
|  | t = 3 | $(x_0, y_3)$ |
| bis |  |  |
|  | t = 7 | $(x_0, y_7)$ |

Das heißt, die x-Position ändert sich beim tatsächlich detektierten Objekt nicht.

Da vorausgesetzt wird, daß sich das Standziel mit Fahrzeuggeschwindigkeit auf dieses zubewegt, ergibt sich durch einen Fehler in der Gierrate nach Abschluß der Messung ein Fehler ($\Delta$ x) zwischen dem Standziel E1 und dem imaginär berechneten Element $E_{i7}$ senkrecht zur Fahrtrichtung des Kraftfahrzeuges.

Der Vergleich zwischen imaginärem Objekt E, und der Position des tatsächlichen Objektes E1 erfolgt immer bei den gleichen y-Koordinaten. D. h. das imaginäre Objekt E1 wird auf eine vorgegebenen y-Position projiziert. Die an dieser Stelle auftretende Differenz der x-Koordinaten wird zur Bestimmung der Winkelabweichung herangezogen. Für den Zeitpunkt t = 7 ergibt sich die Abweichung im Gierwinkel

$$\tan \varphi = \frac{|\, x_0 - x_7 \,|}{|\, y_0 - y_7 \,|}$$

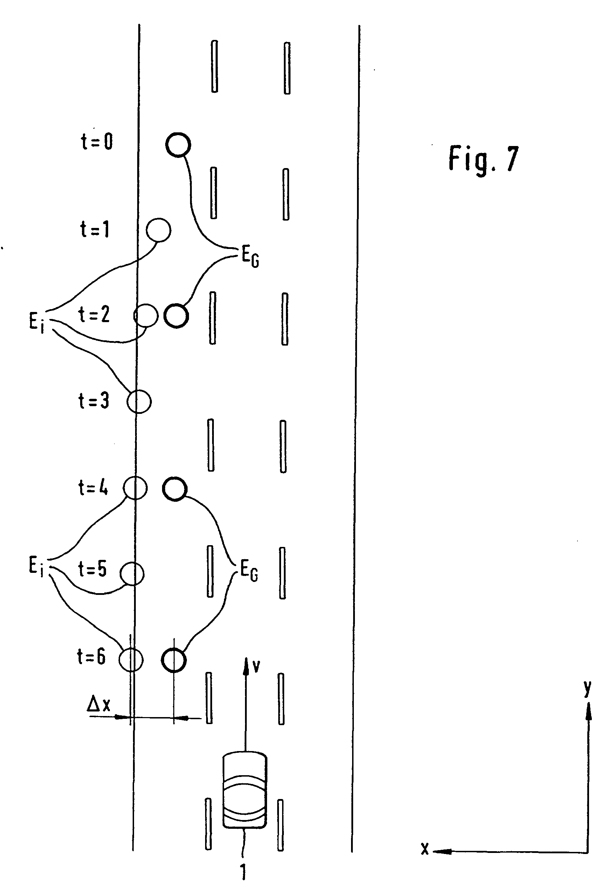

Wird als Vergleichsobjekt ein entgegenkommendes Fahrzeug $E_G$ herangezogen (Fig. 7), wird angenommen, daß sich dieses mit der doppelten Fahrzeuggeschwindigkeit dem zu regelndem Fahrzeug 1 nähert. Das als Vergleichsobjekt fungierende Fahrzeug $E_G$ erscheint dabei nur halb so oft wie die imaginären Objekte $E_i$. Wenn man auch hier davon ausgeht, daß das zu regelnde Fahrzeug geradeaus fährt und daß die Fahrspuren des entgegenkommenden Fahrzeuges und des zu regelnden Fahrzeuges parallel verlaufen, läßt sich der Fehler in der Gierrate erkennen.

Die Gierrate ergibt sich hier aus dem Vergleich der letzten erfaßten Position (xo, y6) des entgegenkommenden Fahrzeuges $E_G$ mit der errechneten Position (x6, y6) des imaginären Objektes $E_i$, zum Zeitpunkt t = 6

$$\tan \varphi = \frac{|\, x_0 - x_6 \,|}{|\, y_0 - y_6 \,|}$$

Die letzte erfaßte Position $(x_0, y_6)$ des entgegenkommenden Fahrzeuges $E_G$ zum Zeitpunkt 6 wird abgespeichert. Dies ist deshalb erforderlich, da das entgegenkommende Fahrzeug $E_G$ schon vorbei ist, während das Ende der Schleppe erst die Hälfte der Strecke zurückgelegt hat. Der Vergleich findet dann statt, wenn das Schleppende (letztes imaginäres Objekt) die letzte Position erreicht hat.

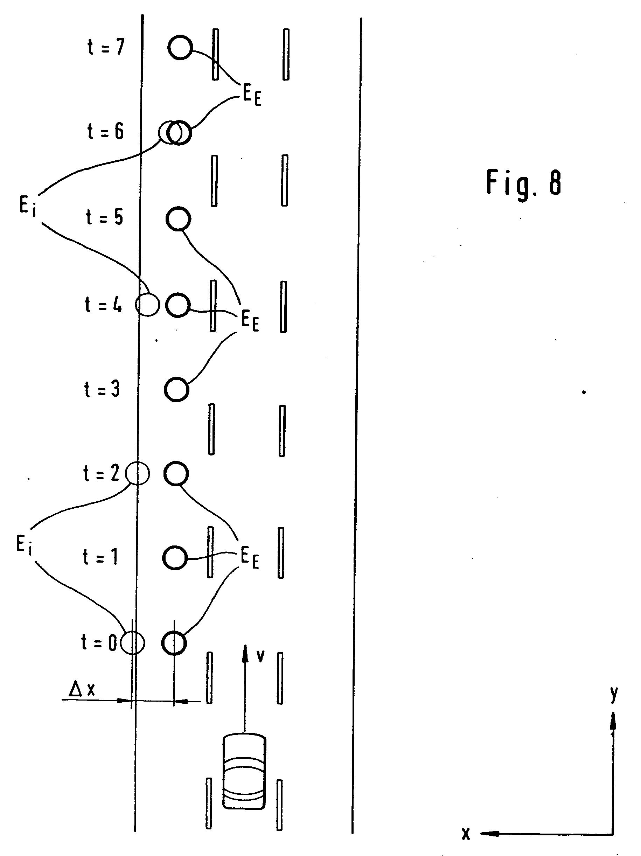

Dient als Vergleichsobjekt ein sich entfernenden Fahrzeug $E_E$, wird angenommen, daß sich auch dieses mit doppelter Fahrzeuggeschwindigkeit vom zu regelnden Fahrzeug $E_i$ entfernt. Deshalb erscheint das sich entfernende Fahrzeug $E_E$ doppelt so oft wie die Schleppobjekte $E_i$ (vgl. Fig. 8). Auch bei dieser Betrachtung wird vorausgesetzt, daß das zu regelnde Fahrzeug 1 geradeaus fährt. Das sich entfernende Fahrzeug $E_E$ und das zu regelnde Fahrzeug 1 verlaufen auf parallelen Fahrspuren und das sich entfernende Fahrzeug $E_E$ führt bei konstanter Geschwindigkeit keinen Spurwechsel durch. Zum Zeitpunkt t = 0 erscheint das Objekt $E_E$ neben dem Fahrzeug 1 zum ersten Mal. Da es sich um ein entfernendes Objekt $E_E$ handelt, wird dessen Position $(x_0, y_0)$ gespeichert, da. anhand dieser Position der Fehler bestimmt wird. Das sich entfernende Objekt $E_E$ zieht an der Position $(x_0, y_6)$ zum Zeitpunkt t = 6 eine Schleppe von imaginären Objekten $E_i$ $(x_i, y_i)$ hinter sich her.

Die Position $x_0, y_0$, des erfaßten Objektes $E_E$ wird mit der imaginären Objektposition $(x_7, y_0)$ verglichen. Der Fehler ergibt sich in der oben beschriebenen Art und Weise.

Die beschriebenen Verfahren sind für gerade Strecken dargestellt. Sie funktionieren aber auch in Kurven oder wenn das eigene Fahrzeug leicht schlingert, da dies durch die Schleppe von imaginären Objekten berücksichtigt bzw. kompensiert wird. Anhand des ermittelten Fehlers und der zwischen dem Vergleichsobjekt und dem zu regelnden Fahrzeug zurückgelegten relativen Distanz läßt sich somit einfach die Abweichung der Gierrate ermitteln und beseitigen.

**Patentansprüche**

1.  Verfahren zur Überprüfung der Gierrate eines sich bewegenden Objektes (1), **dadurch gekennzeichnet, dass** ein in Bewegungsrichtung des Objektes (1) auftretendes Vergleichsobjekt (E1, E2, E3) erfasst wird und eine erfasste erste tatsächliche Position des Vergleichsobjektes (E1, E2, E3) mit einer Projektion verglichen wird, die aus einer zweiten, zu einem anderen Zeitpunkt erfassten tatsächlichen Position des Vergleichsobjektes (E1, E2, E3) abgeleitet wird und auf die erste tatsächliche Position erfolgt und bei Differenz der ersten Position und der Projektion auf Fehler erkannt wird.

2.  Verfahren nach Anspruch 1, **dadurch gekennzeichnet, dass** die tatsächliche Position des Vergleichsobjektes (E1, E2, E3) mit einer aus der erstmaligen Erfassung des Objektes (E1, E2, E3) abgeleiteten Projektion auf die tatsächliche Position verglichen wird.

3. Verfahren nach Anspruch 1, **dadurch gekennzeichnet, dass** sich das Vergleichsobjekt (E1, E2, E3) entgegen der Richtung des sich bewegenden Objektes (1) bewegt, wobei die letzte durch das bewegende Objekt (1) erfasste tatsächliche Position des Vergleichsobjektes (E1, E2, E3) mit der Projektion von der ersten erfassten tatsächlichen Position des Vergleichsobjektes (E1, E2, E3) auf die letzte erfasste Position des Vergleichsobjektes (E1, E2, E3) verglichen wird.

4. Verfahren nach Anspruch 1, **dadurch gekennzeichnet, dass** sich das Vergleichsobjekt (E1, E2, E3) in die Richtung des sich bewegenden Objektes (1) mit einer höheren Geschwindigkeit bewegt als dieses und die erste erfasste tatsächliche Position des Vergleichsobjektes (E1, E2, E3) und die Projektion aus der letzten erfassten tatsächlichen Position auf die erste erfasste tatsächliche Position des Vergleichsobjektes (E1, E2, E3) verglichen wird.

5. Verfahren nach einem der vorhergehenden Ansprüche, **dadurch gekennzeichnet, dass** die Projektion aus einer Objektspur bestimmt wird, die alle Positionen des Vergleichsobjektes (E1, E2, E3) zu vorgegebenen Zeitpunkten enthält.

6. Verfahren nach Anspruch 5, **dadurch gekennzeichnet, dass** die Objektspur ausgehend von der erfassten Position des Vergleichsobjektes (E1, E2, E3) mit Hilfe der Geschwindigkeit und der Gierrate des sich bewegenden Objektes (1) bestimmt wird.

7. Verfahren nach Anspruch 1 und 6, **dadurch gekennzeichnet, dass** die Gierrate des sich bewegenden Objektes (1) mittels einem an diesem angeordneten Gierratensensor gemessen wird.

8. Verfahren nach Anspruch 1 und 6, **dadurch gekennzeichnet, dass** das sich bewegende Objekt (1) ein Kraftfahrzeug (1) ist, bei welchem die Radgeschwindigkeiten zweier Fahrzeugräder gemessen werden und aus der Differenz der Radgeschwindigkeiten die Gierrate des Kraftfahrzeuges (1) bestimmt wird.

9. Verfahren nach Anspruch 8, **dadurch gekennzeichnet, dass** aus der Gierrate der Kurvenradius der Fahrspur (25) des Kraftfahrzeuges (1) bestimmt wird.

10. Anordnung zur Überwachung der Gierrate eines Kraftfahrzeugs (1) gemäß dem Verfahren nach Anspruch 1, mit einem Sensor (10) zum Erfassen von in Bewegungsrichtung des Kraftfahrzeugs (1) auftretenden Vergleichsobjekten (E1, E2, E3), **gekennzeichnet durch**
eine mit dem Sensor (10) verbundene Sensorsignalverarbeitungsanordnung (11), welche den Abstand und die Relativgeschwindigkeit der erfassten Objekte (E1, E2, E3) an eine Regeleinrichtung (12) führt, wobei die Regeleinrichtung (12) Mittel aufweist

- zum Bestimmen einer Projektion eines Vergleichsobjektes (E1, E2, E3), und
- zum Durchführen eines Vergleichs zwischen einer erfassten ersten tatsächlichen Position des Vergleichsobjektes (E1, E2, E3) und der Projektion,
wobei die Projektion aus einer zweiten, zu einem anderen Zeitpunkt erfassten tatsächlichen Position des Vergleichsobjektes (E1, E2, E3) abgeleitet wird und auf die erste tatsächliche Position erfolgt, und
- zum Erkennen auf Fehler bei Differenz der ersten Position und der Projektion.

11. Anordnung nach Anspruch 10, **dadurch gekennzeichnet, dass** der Sensor (10) an der Vorderfront des Fahrzeuges (1) zur Erfassung der Vergleichsobjekte (E1, E2, E3) angeordnet ist.

12. Anordnung nach Anspruch 10 oder 11, **dadurch gekennzeichnet, dass** der Sensor (10) nach dem Echoprinzip arbeitet.

13. Anordnung nach Anspruch 12, **dadurch gekennzeichnet, dass** der Sensor (10) ein Radarsensor ist.

14. Anordnung nach einem der Ansprüche 10 bis 13, **dadurch gekennzeichnet, dass** der Sensor (10), die Signalaufbereitung (11) sowie die Regeleinrichtung (12) eine bauliche Einheit bilden.

**Claims**

1. Method for determining the yaw rate of a moving object (1), **characterised in that**, a comparison object (E1, E2, E3) occurring in the direction of movement of the object (1) is detected and a detected first actual position of the comparison object (E1, E2, E3) is compared with a projection which is derived from a second actual position of the comparison object (E1, E2, E3) detected at another point in time and is undertaken at the first actual position, and an error is recognized if the first position differs from the projection.

2. Method according to claim 1, **characterised in that** the actual position of the comparison object (E1, E2, E3) is compared with a projection derived from the first detection of the object (E1, E2, E3) onto the actual position.

3. Method according to claim 1, **characterised in that** the comparison object (E1, E2, E3) is moving in the opposite direction to the moving object (1), with the last actual position of the comparison object (E1, E2, E3) detected by the moving object (1) being compared with the projection of the first detected actual position of the comparison object (E1, E2, E3) onto the last detected position of the comparison object (E1, E2, E3).

4. Method according to claim 1, **characterised in that** the comparison object (E1, E2, E3) is moving in the same direction as the moving object (1) at a higher speed than the latter and the first detected actual position of the comparison object (E1, E2, E3) and the projection from the last detected actual position onto the first detected actual position of the comparison object (E1, E2, E3) are compared.

5. Method according to one of the previous claims, **characterised in that** the projection is determined from an object track containing all positions of the comparison object (E1, E2, E3) at predetermined points in time.

6. Method according to claim 5, **characterised in that** the object track starting from the detected position of the comparison object (E1, E2, E3) is defined with the aid of the speed and the yaw rate of the moving object (1).

7. Method according to claim 6, **characterised in that** the yaw rate of the moving object (1) is measured by means of yaw rate sensors arranged on this object.

8. Method according to claim 6, **characterised in that** the moving object (1) is a motor vehicle (1) for which the wheel speeds of two vehicle wheels will be measured and the yaw rate of the motor vehicle (1) determined from the difference of the wheel speeds.

9. Method according to claim 8, **characterised in that** the curve radius of the driving track (25) of the motor vehicle (1) is determined from the yaw rate.

10. Arrangement for determining the yaw rate of a motor vehicle (1) in accordance with the method according to claim 1, with a sensors (10) for detecting comparison objects (E1, E2, E3) occurring in the direction of movement of the motor vehicle (1), **characterised by** a sensor signal processing arrangement (11) connected to the sensor (10) which feeds the distance and the relative speed of the detected objects (E1, E2, E3) to a control device (12), with the control device (12) featuring means

- for determining a projection of a comparison object (E1, E2, E3), and
- for executing a comparison between a detected first actual position of the comparison object (E1, E2, E3) and the projection, with the projection being derived from a second actual position of the comparison object (E1, E2, E3) detected at another point in time and being undertaken at the first actual position, and
- for recognizing errors if there is a difference between the first position and the projection.

11. The arrangement as claimed in claim 10, **characterised in that** the sensor (10) is arranged right at the front end of the motor vehicle (1) for detecting the comparison objects (E1, E2, E3).

12. Arrangement according to claim 11, **characterised in that** the sensor (10) operates in accordance with the echo principle.

13. Arrangement according to claim 12, **characterised in that** the sensor (10) is a radar sensor.

14. Arrangement according to claim 13, **characterized in that** the sensor (10), the signal processor (11) and also the control device (12) form one constructional unit.

## Revendications

1. Procédé pour contrôler le taux de lacet d'un véhicule (1) qui se déplace, **caractérisé en ce qu'**un objet de comparaison (E1, E2, E3) apparaissant dans le sens de déplacement de l'objet (1) est enregistré et une première position réelle enregistrée de l'objet de comparaison (E1, E2, E3) est comparée avec une projection qui est déduite d'une seconde position réelle, enregistrée à un autre moment, de l'objet de comparaison (E1, E2, E3) et s'effectue sur la première position réelle, et l'erreur est détectée en cas de différence entre la première position et la projection.

2. Procédé selon la revendication 1, **caractérisé en ce que** la position réelle de l'objet de comparaison (E1, E2, E3) est comparée avec une projection, déduite du premier enregistrement de l'objet (E1, E2, E3), sur la position réelle.

3. Procédé selon la revendication 1, **caractérisé en ce que** l'objet de comparaison (E1, E2, E3) se déplace dans le sens contraire à la direction de l'objet (1) en déplacement, la dernière position réelle, enregistrée par l'objet en déplacement (1), de l'objet de comparaison (E1, E2, E3) étant comparée avec la projection de la première position réelle enregistrée de l'objet de comparaison (E1, E2, E3) sur la dernière position enregistrée de l'objet de comparaison (E1, E2, E3).

**4.** Procédé selon la revendication 1, **caractérisé en ce que** l'objet de comparaison (E1, E2, E3) se déplace dans la direction de l'objet (1) en déplacement avec une vitesse supérieure à celui-ci et la première position réelle enregistrée de l'objet de comparaison (E1, E2, E3) et la projection à partir de la dernière position réelle enregistrée sur la première position réelle enregistrée de l'objet de comparaison (E1, E2, E3) sont comparées.

**5.** Procédé selon l'une quelconque des revendications précédentes, **caractérisé en ce que** la projection est déterminée à partir d'une trace d'objet qui contient toutes les positions de l'objet de comparaison (E1, E2, E3) à des instants prédéfinis.

**6.** Procédé selon la revendication 5, **caractérisé en ce que** la trace d'objet est déterminée à partir de la position enregistrée de l'objet de comparaison (E1, E2, E3) à l'aide de la vitesse et du taux de lacet de l'objet (1) en déplacement.

**7.** Procédé selon les revendications 1 et 6, **caractérisé en ce que** le taux de lacet de l'objet (1) en déplacement est mesuré au moyen d'un capteur de taux de lacet disposé sur cet objet.

**8.** Procédé selon les revendications 1 et 6, **caractérisé en ce que** l'objet (1) en déplacement est un véhicule (1), sur lequel les vitesses de deux roues de véhicule sont mesurées et le taux de lacet du véhicule (1) est déterminé à partir de la différence des vitesses de roue.

**9.** Procédé selon la revendication 8, **caractérisé en ce que** le rayon de virage de la trace de roulement (25) du véhicule (1) est déterminé à partir du taux de lacet.

**10.** Agencement pour le contrôle du taux de lacet d'un véhicule (1) selon le procédé selon la revendication 1, avec un capteur pour l'enregistrement d'objets de comparaison (E1, E2, E3) apparaissant dans le sens de déplacement du véhicule (1), **caractérisé par** un dispositif de traitement de signal de capteur (11) relié au capteur (10), qui guide la distance et la vitesse relative des objets (E1, E2, E3) enregistrées sur un dispositif de réglage (12), le dispositif de réglage (12) présentant des moyens

- pour déterminer une projection d'un objet de comparaison (E1, E2, E3), et
- pour effectuer une comparaison entre une première position réelle enregistrée de l'objet de comparaison (E1, E2, E3) et la projection, la projection étant déduite d'une seconde position réelle enregistrée à un autre moment, de l'objet de comparaison (E1, E2, E3) et s'effectuant sur la première position réelle, et
- pour la détection d'erreur en cas de différence entre la première position et la projection.

**11.** Dispositif selon la revendication 10, **caractérisé en ce que** le capteur (10) est disposé sur l'avant du véhicule (1) pour l'enregistrement des objets de comparaison (E1, E2, E3).

**12.** Dispositif selon la revendication 10 ou 11, **caractérisé en ce que** le capteur (10) travaille selon le principe d'écho.

**13.** Dispositif selon la revendication 12, **caractérisé en ce que** le capteur (10) est un capteur radar.

**14.** Dispositif selon l'une quelconque des revendications 10 à 13, **caractérisé en ce que** le capteur (10), le traitement de signal (11) et le dispositif de réglage (12) forment une unité de construction.

Fig.1

EP 0 899 543 B1

# Fig. 2

Fig. 3

Fig. 4

EP 0 899 543 B1

# Fig. 5

R

$R_I$

$R_I$

y

v,gier

x

1

y

x

Fahrzeugkoordinatensystem

# Fig. 6

E1

◯ Standziel t=0

$E_i$

◯◯ Standziel t=1

◯ ◯ Standziel t=2

$E_i$

◯ ◯ Standziel t=3

◯ ◯ Standziel t=4

$E_i$

◯ ◯ Standziel t=5

◯ ◯ Standziel t=6

$E_i$

◯ ◯ Standziel t=7

v

Δx

y

x

1

EP 0 899 543 B1

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4407757 A1
- EP 0514343 A2
- EP 0354561 A2